(19) Europäisches Patentamt
European Patent Office
Office européen des brevets

(11) Publication number: **0 626 422 A2**

(12) # EUROPEAN PATENT APPLICATION

(21) Application number: **94303498.3**

(51) Int. Cl.5: **C08K 3/30**, C08K 11/00

(22) Date of filing: **16.05.94**

(30) Priority: **25.05.93 US 66794**

(43) Date of publication of application:
**30.11.94 Bulletin 94/48**

(84) Designated Contracting States:
**DE ES FR GB IT NL**

(71) Applicant: **GENERAL ELECTRIC COMPANY**
**1 River Road**
**Schenectady, NY 12345 (US)**

(72) Inventor: **Wozny, John Carl**
**24025 Brister Road,**
**P O Box 112**
**Coolville, Ohio 45723 (US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

(54) **Fire retardant graft copolymer compositions containing antimony sulfides.**

(57) A flame retarded rubber modified graft copolymer composition is provided which easily yields dark colored composition. The composition comprises an antimony sulfide compound as a flame retardant synergist and either a halogen containing rubber modified graft copolymer or a combination of a rubber modified graft copolymer and a halogen containing compound.

EP 0 626 422 A2

## BACKGROUND OF THE INVENTION

### FIELD OF THE INVENTION

The present invention relates to graft copolymer compositions, and more particularly relates to fire retardant graft copolymer compositions containing an antimony synergist.

### DESCRIPTION OF THE RELATED ART

Fire retardant thermoplastic compositions comprising an antimony synergist are known, see Kamiyama et al U.S. Patent 4155949 issued May 22, 1979, Yoshitaki et al U.S. Patent 3981843 issued September 21, 1976, Kirsch et al U.S. Patent 4731405 issued March 15, 1988, and Furukawa et al U.S. Patent 3852393 issued December 3, 1974, all of which are incorporated herein by reference. In view of the above references, fire retardant thermoplastic compositions comprising (i) either a halogenated thermoplastic or a thermoplastic and a halogen containing additive with (ii) an antimony oxide synergist are well known. Disclosed thermoplastics include acrylonitrile-butadiene-styrene (ABS) graft copolymers and halogenated thermoplastics containing acrylonitrile-butadiene-styrene copolymers.

While antimony trioxide is an effective synergist for flame-retardant ABS compositions, its presence in such composition, due to its being a white pigment of high tint strength, requires that in order to provide dark color compositions, high levels of carbon black and/or other dark pigments be added. Such high levels of carbon black and/or other pigments can result in the impairment of certain physical properties such as fire-retardancy. Antimony sulfides have previously been used in polymeric compositions other than ABS resins as a flame retardant additive and as a pigment.

Consequently, there is a need for flame-retardant ABS resin composition containing an antimony synergist which can be made into dark resin compositions with reduced levels of carbon black and/or other dark pigments.

## SUMMARY OF THE INVENTION

The present invention involves flame-regardant rubber modified graft copolymer compositions comprising an antimony sulfide synergist. The antimony sulfides are black and allow for dark resin formulations without using high levels of carbon black and/or other dark pigments.

## DETAILED DESCRIPTION OF THE INVENTION

The flame retardant thermoplastic composition of the present invention comprises (a) (i) a halogen containing rubber modified graft copolymer, or (ii) a halogen-free rubber modified graft copolymer and a halogen containing hydrocarbon, and (b) an antimony sulfide compound present in an amount sufficient to enhance the flame retardancy of the composition. The compositions may further contain carbon black and/or other dark pigments. Preferably the antimony sulfide, and optionally the carbon black and/or other pigments are present in a level sufficient to make the composition black in appearance.

Suitable halogen containing rubber modified graft copolymers comprise rubber particles having grafted thereto a halogen containing grafting copolymer.

The rubber particles useful in this invention are those types of particles as are described in U.S. Pat. No. 4419496 which is incorporated herein by reference in its entirety. Other rubber particles are disclosed in U.S. Pat. No. 3830878 which is incorporated herein by reference. Generally, rubber particles are composed of aliphatic conjugated dienes such as 1,3-butadiene or acrylate homopolymers or interpolymers, and range in size from about 300 Å to about 20,000 Å in diameter. The amount of rubber particles typically ranges from about 10 to about 90, preferably from about 25 to about 80, weight percent based on the total weight of the graft copolymer, and is preferably in the form of polymerized butadiene, isoprene, or acrylate monomers such as 2-ethylhexyl acrylate and butylacrylate, optionally with other comonomers such as styrene.

The rubber particles are those which can have a functionally effective amount of crosslinking. By this is meant that the elastomeric or rubbery component is not completely soluble in a suitable solvent for the elastomeric or rubbery component. That is, the elastomeric or rubbery component of the rubber particles forms a gel and swells in the solvents, but does not dissolve. Typically, in such a situation, the percent gel ranges from about 50 to about 95 percent, and the swelling index ranges from about 3 to about 50.

The rubber modified graft copolymers comprise a substrate of rubber particle and have grafted thereto vinyl aromatic-vinyl cyanide grafting copolymer. The grafting copolymer can be polymer capable of exhibiting flame resistant properties. Typically, the amount of grafting copolymer which is grafted to the rubber particle substrate ranges from about 10 to about 90 weight percent based on the total weight of the rubber modified graft copolymer. A particle size of 1,000 Å typically requires at least 5 parts of grafting copolymer graft to 100 parts of rubber. A preferred range ranges from about 10 to 100 parts of grafting copolymer to about 100 parts of rubber.

Suitable rubber particles include conjugated dienes, acrylate rubbers and interpolymers of the type disclosed in U.S. Pat. No. 4419496. The grafting copolymer attached phase polymers provide a compatibilizing interface which allows for dispersion of rubber particles in a carbonate polymer. Typically grafting copolymers comprise polymerized vinyl aromatics and vinyl cyanides with optional acrylates and methacrylates, acrylic acids, methacrylic acids, hydroxypropyl acrylate, hydroxyethyl acrylate, and the like, and combinations thereof. For the halogen containing rubber modified graft copolymers, the amount of halogen vinyl aromatic monomer which is polymerized in the attached grafting copolymer ranges from about 10 to about 100 weight percent based on the vinyl aromatic monomers polymerized during the graft polymerization. Preferred combinations of monomers which polymerize to form attached grafting copolymer include styrene/bromostyrene, styrene/acrylonitrile/brominated styrene, styrene/methylmethacrylate/brominated styrene, di- and tribromostyrene polymers and interpolymers with acrylonitrile, methylmethacrylate as well as halogen containing alkyl acrylate and methacrylate.

Examples of monomers which provide flame resistant properties to the graft copolymer include bromostyrene, dibromostyrene, tribromostyrene chlorostyrene, di- and trichlorostyrene.

Typically, the rubber particles range in size from about 300 Å to about 20,000 Å, more desirably from about 900 Å to about 1,500 Å, in diameter. If desired, mixtures of rubber particles of various sizes can be employed (e.g., a mixture of 8,000 Å particles and 1,000 Å particles) which particles are obtained, for example, by agglomeration of smaller size particles or selective growth of particles. In a situation wherein a mixture of particles of various sizes is employed, the bimodal mixture is particularly desired, and the small size particles preferably range from about 900 Å to about 1,500 Å in diameter, while the large size particles range from about 4,000 Å to about 10,000 Å in diameter.

The rubber modified graft copolymer resin in the resin composition according to the present invention includes a resin obtained by graft-copolymerizing a vinyl cyanide monomer such as acrylonitrile and a vinyl aromatic monomer such as styrene, in the presence of a rubber containing as one ingredient a butadiene compound such as polybutadiene or styrene-butadiene copolymer; a resin composition obtained by mixing said graft-copolymerized resin with a non-grafted vinyl cyanide/vinyl aromatic copolymer resin; and a resin composition obtained by homogeneously mixing polybutadiene or a copolymer comprising butadiene as one ingredient with said vinyl cyanide compound/vinyl aromatic hydrocarbon copolymer resin.

The ABS resin may be an ABS resin generally called "transparent ABS resin", obtained by replacing a part, i.e., from 30 to 60 weight percent, of the vinyl aromatic hydrocarbon monomer with another monomer such as methyl methacrylate or a composition containing said resin. The vinyl cyanide monomers herein refer to monomers such as acrylonitrile and methacrylonitrile and mixtures of said monomers. The vinyl aromatic monomers refer to monomers such as styrene, $\alpha$-methylstyrene, dimethylstyrene and styrenes, the nucleus of which is substituted with a halogen, and mixtures of said monomers.

Referring to the proportion of the vinyl cyanide monomer to the vinyl aromatic monomer used in the preparation of said rubber modified graft copolymer, the vinyl cyanide monomer is used in an amount of 10 to 50 weight percent, preferably 20 to 40 weight percent and the vinyl aromatic monomer is used in an amount of 50 to 90 weight percent, preferably 60 to 80 weight percent based on the total weight of the grafting copolymer. The polybutadiene rubber or butadiene copolymer rubber is used in an amount of 5 to 50 parts by weight, preferably 10 to 35 parts by weight, per 100 parts by weight of the combined weight of vinyl cyanide monomer and vinyl aromatic monomer.

As the halogen containing flame retardant to be incorporated in the composition, there can be employed, for instance, a halogenated hydrocarbon compound such as tetrabromobisphenol A, decachlorobiphenyl, decabromobiphenyl, tetrabromophthalic anhydride, hexabromobenzene, tetrabromobutane, pentabromotoluene, tetrabromoaniline and tetrabromoethane. However, the halogen containing flame retardant to be used in this invention is not limited to those exemplified above. Among them, tetrabromobisphenol A decachlorobiphenyl exhibit an excellent flame-retarding effect.

The rubber modified graft copolymers are known and can be prepared by radical polymerization, particularly by emulsion polymerization, suspension polymerization, solution polymerization or bulk polymerization. They preferably have molecular weights $M_w$ (mean weight, determined by scattered light or sedimentation) from 15,000 to 200,000.

In addition to the aforementioned additives, other additives can be included in the composition of the present invention such as additional rubbers, polymers, fillers (i.e., a tetrafluoroethylene polymer or glass fibers), pigments, dyes, antioxidants, stabilizers, ultraviolet light absorbers, mold release agents and other additives commonly employed in rubber modified graft copolymer compositions.

The compositions may be made dark or black in color by using sufficient levels of $Sb_2S_3$ alone as the colorant/synergist or by adding carbon black and/or other dark pigments in combination with $Sb_2S_3$.

The compositions preferably comprise a rubber modified graft copolymer at a level of from 20 to 99 percent by weight based on the total weight of the composition, preferably from 20 to 98 percent by weight thereof, more preferably from 50 to 98 weight percent thereof, and most preferably from 90 to 95 weight percent thereof; preferably comprises from 1 to 20 percent by weight of an antimony sulfide, more preferably from 1 to 10 percent by weight thereof, and most preferably from 1 to 5 percent by weight thereof. If the graft copolymer is a halogen containing graft copolymer then no additional halogen compound need be present in the composition, thus the halogen compound may be present in the composition at a level of from 0 to 20 percent by weight based on the total weight of the composition, more preferably from 1 to 20 parts by weight thereof, and most preferably from 1 to 10 parts by weight thereof. The compositions may also comprise an amount of a polycarbonate resin, for example, from 25 to 70 percent by weight thereof, or may be free of polycarbonate resin.

The polycarbonate resin can be a polycarbonate of a di-(monohydroxyphenyl)-substituted aliphatic hydrocarbon, represented by 2,2-(4,4'-dihydroxy-diphenyl) propane (Bisphenol-A). The polycarbonates are made by converting di-(monohydroxyphenyl)-substituted aliphatic hydrocarbons with phosgene in a manner well known in the art (refer to British Pat. No. 772,627 for example).

Alternatively, the halogen containing flame retardant may be a halogen containing polycarbonate.

Thermoplastic, aromatic copolycarbonates, which are suitable include those based on the diphenols of the formula (I)

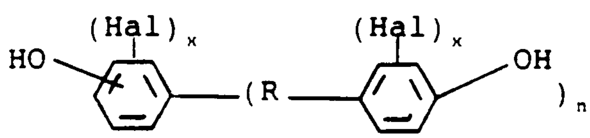

(I)

in which

R is a single bond, a $C_1$-$C_5$-alkylene, a $C_2$-$C_5$-alkylidene, a $C_5$-$C_6$-cycloalkylidene, -S- or -$SO_2$-, halogen (such as chlorine or bromine),

x is 0, 1 or 2 and

"n" is 1 or 0, the copolycarbonate containing 3-20% by weight of halogen, particularly bromine, in the form of halogenated diphenols which have been condensed in.

The diphenols of the formula (I) are, for example, hydroquinone, resorcinol, 4,4-dihydroxydiphenyl, 2,2-bis(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane and 2,2-bis-(3,5-dibromo-4-hydroxyphenyl)-propane.

Preferred diphenols of the formula (I) are 2,2-bis-(4-hydroxyphenyl)-propane, 2,2-bis-(3,5-dichloro-4-hydroxyphenyl)-propane, 2,2-bis-(3,5-dibromo-4-hydroxyphenyl)-propane and 1,1-bis-(4-hydroxyphenyl)-cyclohexane.

The preparation of the polycarbonates which are suitable are known from the literature and is possible, for example, by the phase boundary process using phosgene, or by the process in the homogeneous phase (the so-called pyridine process) using phosgene.

The polycarbonates include those which have molecular weights (mean weight $M_w$, measured by ultracentrifuging or scattered light measurement) of 10,000 to 100,000, preferably of 20,000 to 80,000.

The polycarbonates which are suitable can be branched, preferably by the known incorporation of 0.05-2.0 mol %, relative to the diphenols employed, of tri- or higher-functional compounds, for example tri-or higher-valent phenols.

Preferred copolycarbonates are those of bisphenol A with up to 15% by weight, relative to total diphenols, of bis-(3,5-dibromo-4-hydroxyphenyl)-propane (tetrabromobisphenol A). Dark or black pigments and/or carbon black may be present in the composition at a level of from 0 to 20 percent by weight based on the total weight of the composition, more preferably from 1 to 15 percent by weight thereof.

The antimony sulfide is preferably in the form of $Sb_2S_3$ free of other antimony compounds but may also be used in combination with other antimony sulfide compounds such as those derived from antimony oxide

(Sb203) and a sulfur compound such as thiols and thiodipropionates. The critical element is that the antimony sulfide be dark in color, preferably black in color.

Applicant has also discovered that smaller particle size (1 to 10 micron weight average diameter) antimony sulfide relative to the larger particle antimony sulfide, splay is eliminated at moderate temperatures, impact strength is improved, samples are darker, even at much lower sulfide levels.

**Examples**

TABLE 1

| | A | 1 | 2 |
|---|---|---|---|
| DABS 1 | 75 | 75 | 75 |
| SAN 1 | 25 | 25 | 25 |
| $Sb_2O_3$ | 14 | 7 | - |
| $Sb_2S_3$ (40μ) | - | 8.75 | 17.48 |
| Izod, im @ 450 °F | 2.6 | 1.0 | 1.0 |
| Gardner, im @ 450 °F | | | |
| MFE | 17 | <2 | - |
| Std. Dev. | 7 | - | - |
| UL94-VB, .060" | | | |
| mbt | 4 | 8 | 19 |
| abt | 2 | 3 | 8 |
| rating | V-O | V-O | V-1 |
| Specific Gravity | 1.245 | 1.25 | 1.261 |
| Color | white | dark gray | black |

**TABLE 2**

| | B | 3 | 4 | C | D |
|---|---|---|---|---|---|
| DABS 1 | 73 | 73 | 73 | 73 | 73 |
| HRG 1 | 2 | 2 | 2 | 2 | 2 |
| SAN 1 | 25 | 25 | 25 | 25 | 25 |
| Sb2O3 | 14 | 7 | 0 | 0 | 14 |
| Sb2S3 (4μ) | 0 | 8.75 | 17.48 | 0 | 0 |
| C Black | 0 | 0 | 0 | 0 | 2 |
| Tot. Parts | 121.25 | 123.0 | 124.73 | 107.25 | 123.25 |
| CF | 13.6 | 13.6 | 13.6 | 15.4 | 13.6 |
| Izod, im @ 450°F | 1.8 | 1.4 | 1.2 | 3.9 | 1.5 |
| Gardner, im @ 450°F | | | | | |
| MFE | 14.09 | 6.45 | 5.67 | 17.33 | 6.09 |
| Std. Dev. | 6.2 | 1.91 | 1.89 | 6.48 | 3.84 |
| UL94-VB, .060" | | | | | |
| mbt | 9.0 | 24.0 | NSE | NSE | 10.0 |
| abt | 3.4 | 7.6 | | | 3.5 |
| rating | V-O | V-1 | | | V-0 |

TABLE 2 - (CONTINUED)

| | B | 3 | 4 | C | D |
|---|---|---|---|---|---|
| UL94-VB, .090" | | | | | |
| mbt | - | - | 25.0 | NSE | - |
| abt | | | 13.3 | | |
| rating | | | V-1 | | |
| Hardness, | | | | | |
| 1/8" imu | 100R | 100R | 100R | 101R | 101R |
| Gloss, | | | | | |
| 450°F-60* | 68.0 | 72.7 | 64.0 | 71.3 | 70.5 |
| Color, 450°F | white | black | black | manila | black |
| L* | 92.38 | 34.98 | 33.36 | 78.27 | 28.02 |
| a* | -0.23 | 0.57 | 0.53 | 0.86 | -0.17 |
| b* | 13.31 | -0.94 | -0.47 | 25.29 | -0.97 |
| Gate Blush, 450°F | | | | | |
| area, sq.in. | 0 | 0.02 | 0.06 | 0 | 0.02 |
| % surface, disc | 0 | 0.15 | 0.46 | 0 | .15 |
| Splay, | | | | | |
| im @ 450°F | none | none | none | none | none |

Examples A through D and 1 through 4 each contain .75 parts by weight chlorinated polyethylene, 3 parts by weight copolymer of butadiene and acrylonitrile (Hycar 1453 HM Crumb), 1.5 parts by weight magnesium stearate, 0.5 parts by weight polyoxyethylene-polyoxypropylene block polymer (Pluronic F-88), 1.25 parts by weight (Ferro 832) modified dibutyltin maleate, and 0.25 parts by weight magnesium oxide as additives. Examples A through D are comparative examples lacking antimony sulfide whereas examples 1 through 4 contain antimony sulfide. NSE means not self-extinguishing. Note that the lower the L the darker the material. Color was measured using a Macbeth 1500+ color spectrophotometer.

DABS 1 is a graft copolymer of dibromostyrene, styrene and acrylonitrile on a butadiene rubber core; and contains 21 weight percent butadiene rubber, 27 weight percent dibromostyrene, 16.7 weight percent

acrylonitrile, and 35.3 weight percent styrene based on the total weight of the DABS 1 graft copolymer. SAN 1 is a styrene acrylonitrile polymer (weight ratio 72:28/S:AN). The 40μ and 4μ particle sizes are based on a number size average. The smaller particle size antimony sulfide is preferred, for example 0.5 to 10μ, more preferably 0.5 to 1μ, and most preferably 1μ. HRG1 is an ABS graft copolymer. C Black is a carbon black.

## Claims

1. A dark color flame resistant thermoplastic composition, comprising
   a. a rubber modified graft copolymer present at a level of from 20 to 98 percent by weight based on the total weight of the composition
   b. a halogen containing flame-retardant present at a level of from 1 to 70 percent by weight based on the total weight of the composition, and
   c. an antimony sulfide compound present at a level of from 1 to 10 percent by weight based on the total weight of the composition.

2. The composition of claim 1 wherein said rubber modified graft copolymer having a grafting copolymer attached to a rubber substrate of
   a. 5 to 90 percent by weight of the grafting copolymer based on the total weight of the rubber modified graft copolymer, said grafting copolymer is a reaction product of a mixture of
      (1) 50 to 90% by weight of styrene, α-methylstyrene, nuclear-substituted styrene, or methylmethacrylate based on the total weight of the grafting copolymer, and
      (2) 50 to 10% by weight of (meth)acrylonitrile, methyl methacrylate, maleic anhydride, or N-substituted maleimide based on the total weight of the grafting copolymer, on
   b. 90 to 10 percent by weight of a diene rubber substrate based on the total weight of the rubber modified graft copolymer.

3. The composition of claim 1 or claim 2 wherein said halogen containing flame-retardant is selected from the group consisting of halo-bisphenol A, halo-biphenyl, halo-polycarbonate, halo-diphenyl ether, and halo-diphenyl alkyl diether.

4. The composition of claim 1 or claim 2 wherein said flame-retardant is selected from the group consisting of tetrabromo bisphenol A, decachlorobiphenyl, octabromodiphenyl ether and halo-diphenyl alkyl diether of the formula

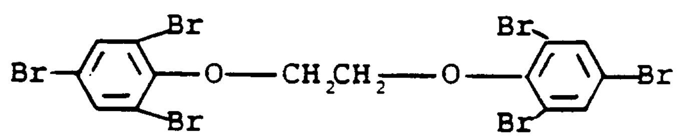

5. The composition of claim 1 wherein said antimony sulfide is $Sb_2S_3$.

6. The thermoplastic composition of claim 4 wherein said graft copolymer is acrylonitrile-butadiene-styrene resin, and said antimony sulfide is $Sb_2S_3$.

7. A thermoplastic composition comprising
   a. a halogen containing rubber modified graft copolymer present at a level from 20 to 99 percent by weight based on the total weight of the composition, and
   b. an antimony sulfide present at a level of from 1 to 20 percent by weight based on the total weight of the composition.

8. The composition of claim 7 further comprises from 10 to 70 percent by weight of an aromatic polycarbonate resin based on the total weight of the composition.

9. The composition of claim 1 wherein said halogen flame-retardant is a bromine containing polycarbonate resin.

10. The composition of claim 9 wherein said bromine containing polycarbonate resin comprises units of the formula:

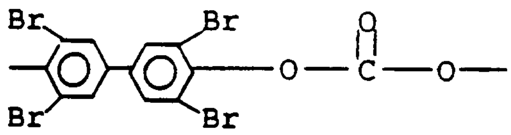

and

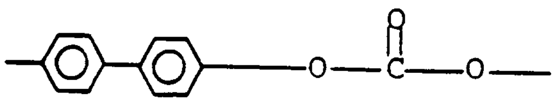

11. The composition of claim 1 wherein said antimony sulfide is present at a level of from 1 to 5 percent by weight based on the total weight of the composition.

12. A dark color thermoplastic composition, consisting essentially of
   a. a rubber modified graft copolymer present at a level of from 20 to 98 percent by weight based on the total weight of the composition, and
   b. a halogen containing flame-retardant present at a level of from 1 to 70 percent by weight based on the total weight of the composition, and
   c. an antimony sulfide compound present at a level of from 1 to 10 percent by weight based on the total weight of the composition.

13. A thermoplastic composition consisting essentially of
   a. a halogen containing rubber modified graft copolymer present at a level from 20 to 99 percent by weight based on the total weight of the composition, and
   b. an antimony sulfide present at a level of from 1 to 20 percent by weight based on the total weight of the composition.